# EUROPÄISCHE PATENTSCHRIFT

(11) **EP 2 198 501 B1**
(45) Veröffentlichungstag und Bekanntmachung des Hinweises auf die Patenterteilung: **25.05.2016**
(21) Anmeldenummer: 08801102.8
(22) Anmeldetag: 31.07.2008
(51) Int. Cl.: H02K 7/10, H02K 16/00, B30B 15/14

(54) **ANTRIEBSVORRICHTUNG MIT DREHMOMENTKOMPENSATION**
DRIVE DEVICE WITH TORQUE COMPENSATION
DISPOSITIF D'ENTRAÎNEMENT AVEC COMPENSATION DU COUPLE

(30) Priorität: 12.09.2007 DE 102007043376
(43) Veröffentlichungstag der Anmeldung: 23.06.2010
(73) Patentinhaber: Schuler Pressen GmbH, 88250 Weingarten (DE)
(72) Erfinder: SPIESSHOFER, Thomas, 88697 Bermatingen (DE)
(74) Vertreter: Otten, Roth, Dobler & Partner mbB Patentanwälte
(86) Internationale Anmeldenummer: PCT/DE2008/001264
(87) Internationale Veröffentlichungsnummer: WO 2009/033441

(56) Entgegenhaltungen:
- WO-A-2005/039024
- DE-A1- 19 704 504
- DE-A1-102004 009 256
- FR-A- 1 332 959
- GB-A- 1 220 403
- US-A1- 2005 145 117

## Beschreibung

Die Erfindung betrifft eine Antriebsvorrichtung für Anwendungen in Umformpressen, bestehend aus mehreren elektrischen Antrieben mit gemeinsamer Drehmomentkompensation nach dem Oberbegriff des Anspruch 1.

### Stand der Technik

In Umformpressen, wie beispielsweise Mehrstößeltransferpressen, Pressenstraßen, Stufenpressen, Servopressen oder Stanzautomaten gibt es vielfältige Antriebsaufgaben. Insbesondere in den Bereichen Pressenantriebe und Werkstücktransportsysteme werden dabei bezüglich Kraftübertragung und Dynamik sehr hohe Anforderungen an die Antriebe gestellt.

Wurden bei den Antrieben von mechanischen Pressen in der Vergangenheit fast ausnahmslos Schwungradantriebe eingesetzt, so ist in jüngster Zeit ein Trend zu direkt angetriebenen Pressen mit Servomotoren zu erkennen. Bei großen erforderlichen Presskräften stoßen Servomotoren zur Zeit noch an ihre Leistungsgrenzen. Um die Grenze der mit Servomotoren maximal möglichen Presskraft nach oben zu bringen, geht man häufig dazu über mehrere Servomotoren, welche auf das gleiche Bewegungsübertragungsmittel wirken, einzusetzen.

In der DE 10 2004 009 256 A1 ist eine so genannte Mehrservopresse der oben beschriebenen Ausführung dargestellt. Bei dieser technischen Lösung wird als Vorteil gesehen, mehrere Servomotoren ein gemeinsames Stirnrad antreiben zu lassen, das mit einem Exzenter verbunden ist. Ein solches Getriebe erweist sich als kostengünstig, robust und steif. Weil die Kraftübertragung auf das Stirnrad über mehrere, gleichzeitig mit dem Stirnrad kämmende Ritzel erfolgt ist es möglich, die gesamte zur Umformung erforderliche Maximalkraft über das so gebildete Getriebe zu leiten.

Bei den Werkstücktransportsystemen, auch Transfersysteme genannt, verwendet man seit längerem unterschiedliche elektrische Antriebe, welche die früher üblichen mechanischen, an den Pressenantrieben gekoppelten Antriebe nahezu vollständig abgelöst haben. In der DE 198 01 731 A1 ist ein Transfersystem beschrieben, bei dem ebenfalls zwei Motoren auf das gleiche Bewegungsübertragungsmittel wirken. Dabei treiben zwei stationäre Antriebsmotoren über eine Zugmittelanordnung eine teleskopierbare Auslegeranordnung an. Durch eine entsprechende Regelung der Antriebsmotoren führt die als Teleskopfeeder bekannte Transportvorrichtung Horizontal- und Vertikalbewegungen aus. Der geforderte Transportweg besteht in der Regel aus sich überlagernden horizontalen und vertikalen Bewegungen. Beliebige Bewegungsprofile sind mit diesem System fahrbar.

Sowohl bei den Pressenantrieben, als auch bei den Transferantrieben werden häufig für eine Antriebseinheit zwei Servomotoren eingesetzt. Der Hauptvorteil liegt dabei sicherlich in der größeren Leistungsfähigkeit der Antriebseinheit gegenüber des Einsatzes eines einzelnen Servomotors. Die Redundanz beim Einsatz zweier Servomotoren ist unter Sicherheitsaspekten ebenfalls als Vorteil zu nennen.

Nachteil beim Einsatz mehrerer Servomotoren in einer Antriebseinheit ergeben sich durch den aufwendigen Steuerungs- und Regelungsaufwand. Da die Servomotoren in der Regel an ihren Leistungsgrenzen betrieben werden wird angestrebt, dass die beiden Servomotoren exakt gleich viel Leistung an das gemeinsame Bewegungsübertragungsmittel, wie zum Beispiel Zahnrad oder Zahnriemen, abgeben. Im Idealfall werden beide Servomotoren mit 100 % ihres maximalen Leistungsvermögens betrieben, so dass sich durch den Einsatz zweier Motoren eine Verdoppelung der Maximalleistung im Vergleich zum Einsatz eines Motors ergibt. In der Praxis stellt sich diese gleichmäßige Drehmomentverteilung als problematisch dar. Um eine hohe Regelgüte des Gesamtsystems erzielen zu können werden beide Servomotoren lagegeregelt betrieben. In diesem Fall ist die Stromaufnahme der Servomotoren abhängig vom Reaktionsmoment, welches die Servomotoren bei der Kraftübertragung durch das Bewegungsübertragungsmittel erfahren. Die Reaktionsmomente, die die beiden Servomotoren erfahren, können aufgrund der Umgebungskonstruktion unterschiedlich sein. Ein Grund dafür können beispielsweise unterschiedliche Riemenspannungen eines gemeinsamen Zahnriemens sein. Die Folge dieser ungleichen Drehmomentenverteilung ist, dass ein Servomotor seine maximal mögliche Leistung bzw. seine maximal zulässige Stromaufnahne früher erreicht, als der andere Servomotor. Bei Erreichen dieser Grenzen spricht ein Überlastmechanismus an und die gesamte Antriebseinheit kommt zum Stehen. Somit ist eine Verdopplung der Leistung durch den Einsatz von zwei Servomotoren in der Praxis nicht ohne weiteres möglich. Eine mögliche Methode die Drehmomente der beiden in Eingriff stehenden Servomotoren zu synchronisieren wird in der DE 10 2004 009 256 A1 beschrieben. Dabei werden die zweiten Servomotoren über eigene Drehmomentregler angesteuert, die sicherstellen sollen, dass beide Motoren das gleiche Drehmoment aufbringen.

Der Nachteil dieser Methode ist, wie auch in der DE 10 2004 009 256 A1 eingeräumt, der hohe Regelaufwand. Darüber hinaus wird sicherlich auch die Störanfälligkeit des Gesamtsystems durch die zusätzlichen Regelkreise deutlich erhöht.

Schließlich ist aus der Druckschrift GB-A-1220403, die eine Antriebsvorrichtung nach dem Oberbegriff des Anspruchs 1 offenbart, ein Mehrfachantrieb, insbesondere die Verwendung von zwei oder mehreren synchron laufenden Motoren beispielsweise für den Einsatz in großen Getrieben, bekannt.

### Aufgabe und Vorteil der Erfindung

Ausgehend von Stand der Technik ist es Aufgabe der Erfindung, eine Antriebsvorrichtung zu schaffen, bei der mehrere Motoren auf ein gemeinsames Bewegungsübertragungsmittel wirken, wobei beide Motoren das exakt gleiche Drehmoment aufbringen sollen. Diese Aufgabe wird ausgehend von einer Antriebsvorrichtung nach dem Oberbegriff des Anspruch 1, durch die kennzeichnenden Merkmale des Anspruch 1 gelöst. In den Unteransprüchen sind vorteilhafte und zweckmäßige Weiterbildungen der erfindungsgemäßen Antriebsvorrichtung angegeben.

Der Erfindung liegt der Gedanke zugrunde, mehrere, in der Regel zwei, Motoren bzw. mit den Motoren verbundene Getriebe, gegenseitig mechanisch so zu verbinden, dass die Reaktionsmomente sich kompensieren.
Eine Hebelage, welche beide Motoren verbindet, soll dabei Drehmomente von einem Motor zum anderen derart übertragen, dass diese am benachbarten Motor jeweils gegensinnig eingeleitet werden. Erfindungsgemäß besteht die Hebelage zur Kompensation der Reaktionsmomente aus einem ersten Ausgleichshebel, welcher mit dem ersten Motor fest verbunden ist, aus einem zweiten Ausgleichshebel, welcher mit dem zweiten Motor fest verbunden ist sowie einer Lasche, welche in einem Drehpunkt mit dem ersten Ausgleichshebel und in einem zweiten Drehpunkt mit dem zweiten Ausgleichshebel drehbar verbunden ist.

Diese Kompensation der Reaktionsmomente ist besonders dann wichtig, wenn mit dem Einsatz von zwei Antrieben eine Verdoppelung, beziehungsweise beim Einsatz von drei Antrieben eine Verdreifachung der Leistung angestrebt wird. Die Antriebe werden dabei - lagegeregelt betrieben. Bei dieser Regelungsart kommen die Vorteile der erfindungsgemäßen Antriebsvorrichtung voll zum tragen. Durch die Kompensation der Reaktionsmomente können alle Antriebe gleichmäßig bis an Ihre Leistungsgrenze, beziehungsweise bis zu Ihrer maximalen Stromaufnahme betrieben werden.

Weitere Einzelheiten und Vorteile der Erfindung ergeben sich aus dem, anhand der Zeichnungen dargestellten Ausführungsbeispiels.

Es zeigen:
- Figur 1: Antriebsvorrichtung in einer Draufsicht
- Figur 2: Antriebsvorrichtung in einer Seitenansicht

### Beschreibung eines Ausführungsbeispiels

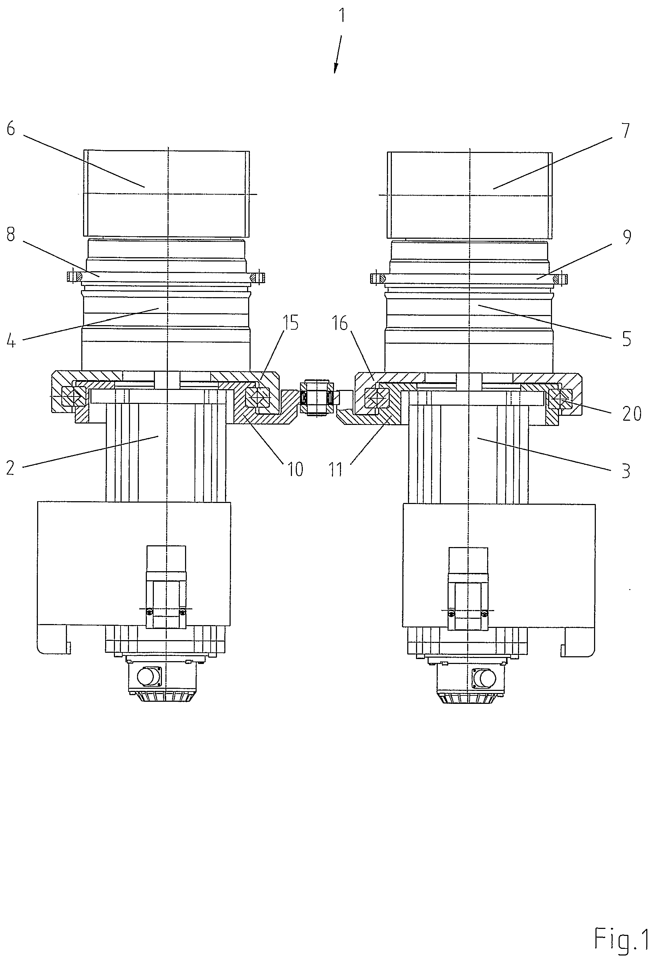

Figur 1 zeigt eine vereinfachte Darstellung der erfindungsgemäßen Antriebsvorrichtung 1. Zu sehen sind zwei Servomotoren 2,3. Die beiden Servomotoren 2,3 sind mit jeweils einem Getriebe 4,5 wirkverbunden. In diesem Ausführungsbeispiel werden Planetengetriebe eingesetzt, aber auch alle anderen bekannten Getriebearten sind denkbar. Abtriebsseitig befinden sich Riemenscheiben 6,7, welche ihrerseits mit den Getrieben wirkverbunden sind. Kennzeichnend für die erfindungsgemäße Antriebsvorrichtung 1 ist, dass beide Servomotoren auf das gleiche Bewegungsübertragungsmittel wirken, in diesem Falle auf einen hier nicht dargestellten Riemen, beispielsweise einen Zahnriemen. Auch alle anderen, dem Stand der Technik bekannten Bewegungsübertragungsmittel, wie beispielsweise Flachriemen oder Zahnräder sind einsetzbar.

Die beiden dargestellten Antriebsstränge sind über Befestigungsflansche 8,9 mit der Umgebungskonstruktion verbunden. Zwischen den Getrieben 4,5 und den Servomotoren 2,3 ist die erfindungswesentliche Hebelage zur Drehmomentkompensation zu erkennen. Fest an den Servomotoren 2,3 sind dabei die Ausgleichshebel 10,11 befestigt. Diese beiden Ausgleichshebel 10,11 sind über eine Lasche 12 gelenkig miteinander verbunden. Die Gelenkanordnung bestehend aus den beiden Ausgleichshebel 10,11 und der Lasche 12 ist derart ausgebildet, dass ein Reaktionsmoment am ersten Servomotor 2 so auf den zweiten Servomotor 3 übertragen wird, dass das Moment in die entgegen gesetzte Richtung wirkt. Da diese Art der Drehmomentübertragung auch vom zweiten Servomotor 3 auf den ersten Servomotor 2 wirkt, werden unterschiedliche Reaktionsmomente kompensiert.

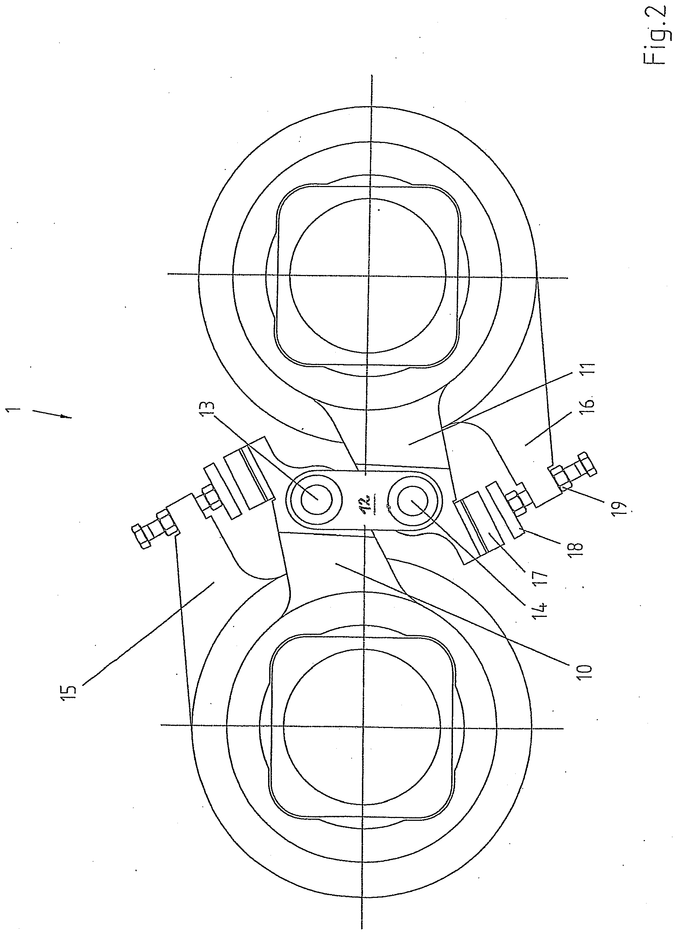

In Figur 2 wird die oben beschriebene Gelenkanordnung verdeutlicht. In dieser Ansicht sind die Ausgleichshebel 10,11 sowie die daran gelagerte Lasche 12 mit den Gelenkpunkten 13,14 deutlich zu sehen.

Die Anschlaghebel 15, 16 sind fest mit den Getrieben 4,5 verbunden. Sie haben die Aufgabe die Bewegungen, welche die Hebelage, bestehend aus den Ausgleichshebel 10,11 und der Lasche 12, ausführt zu begrenzen. Dazu werden definierte Spalte zwischen den Puffern 17, welche an den Ausgleichshebel 10,11 befestigt sind, und den Puffern 18, welche an den Anschlaghebeln 15,16 befestigt sind voreingestellt. Die Einstellung dieser Spalte erfolgt mittels Stellschrauben 19. Die Ausgleichshebel 10,11 und die Anschlaghebel 15,16 sind durch geeignete Lagerungen 20 drehbar miteinander verbunden. Die Begrenzung durch die Anschlaghebel 15,16 ist für die Kompensation der Drehmomente im laufenden Betrieb nicht relevant. Sie dient lediglich der Absicherung einer Notfallsituation, beziehungsweise einer nicht vorhersehbaren Bewegungssituation der Kompensationsvorrichtung.

Die Erfindung ist nicht auf das dargestellte und beschriebene Ausführungsbeispiel beschränkt.

Beispielsweise können statt der beschriebenen zwei Servomotoren auch drei oder mehr Antriebe eingesetzt werden. Insbesondere bei den beschriebenen Anwendungen im Bereich des Pressenhauptantriebes ist es durchaus denkbar mehr als zwei Antriebsmotoren einzusetzen, die auf ein gemeinsames Antriebsrad wirken.

Ebenso ist es möglich auch andere elektrische Antriebe einzusetzen, als die im Ausführungsbeispiel beschriebenen Servomotoren. Alle anderen marktgängigen Antriebstypen sind dabei denkbar.

### Bezugszeichenliste

- 1: Antriebsvorrichtung
- 2, 3: Servomotoren
- 4, 5: Getriebe
- 6, 7: Riemenscheiben
- 8, 9: Befestigungsflansche
- 10, 11: Ausgleichshebel
- 12: Lasche
- 13, 14: Gelenkpunkt
- 15, 16: Anschlaghebel
- 17: Puffer an Ausgleichshebel
- 18: Puffer an Anschlaghebel
- 19: Stellschrauben
- 20: Lagerung

## Patentansprüche

1. Antriebsvorrichtung in einer Umformpresse, bestehend aus mindestens zwei Antriebsmotoren, wobei die Antriebsmotoren direkt oder über Getriebemittel mit einem gemeinsamen Bewegungsübertragungsmittel wirkverbunden sind, wobei Motoren (2,3) über eine Hebelage (10,11,12) mechanisch so miteinander verbunden sind, dass die Reaktionsmomente, welche die Motoren im Betrieb erfahren, gegenseitig kompensiert werden,
**dadurch gekennzeichnet, dass** die Motoren (2,3) lagegeregelt betrieben werden und
dass die Hebelage zur Kompensation der Reaktionsmomente aus einem ersten Ausgleichshebel (10), welcher mit dem ersten Motor (2) fest verbunden ist, aus einem zweiten Ausgleichshebel (11), welcher mit dem zweiten Motor (3) fest verbunden ist, sowie einer Lasche (12), welche in einem Drehpunkt (13) mit dem ersten Ausgleichshebel (10) und in einem zweiten Drehpunkt (14) mit dem zweiten Ausgleichshebel (11) drehbar verbunden ist, besteht.

2. Antriebsvorrichtung nach Anspruch 1,
**dadurch gekennzeichnet, dass** das Reaktionsmoment des Motors (2) gegensinnig auf den Motor (3) übertragen wird und umgekehrt.

3. Antriebsvorrichtung nach einem oder mehreren der Ansprüche 1 oder 2,
**dadurch gekennzeichnet, dass** die Motoren (2,3) Servomotoren sind

4. Antriebsvorrichtung nach einem oder mehreren der Ansprüche 1 bis 3,
**dadurch gekennzeichnet, dass** die Bewegung der Hebelage (10,11,12) durch Anschlaghebel (15, 16) begrenzt werden, welche mit Getrieben (4,5) fest verbunden sind.

5. Antriebsvorrichtung nach einem oder mehreren der Ansprüche 1 bis 4,
**dadurch gekennzeichnet, dass** an den möglichen Kontaktflächen zwischen den Ausgleichshebel (10,11) und den Anschlaghebel (15,16) Puffer (17,18) vorgesehen sind, wobei mittels einer Stellschraube (19) die Puffer (18), welche mit den Anschlaghebel (15,16) verbunden sind, so eingestellt werden können, dass ein definierter Spalt entsteht.

## Claims

1. A drive unit in a forming press, consisting of at least two drive motors, wherein the drive motors are operatively connected directly or via gear means with a common motion transmission means, wherein motors (2, 3) are mechanically connected with each other via a lifting position (10, 11, 12), such that the reaction moments, which the motors undergo during operation, are mutually compensated,
**characterized in that** the motors (2, 3) are operated under position control and
that the lifting position for compensation of the reaction moments consists of a first compensating lever (10) which is firmly connected with the first motor (2), a second compensating lever (11), which is firmly connected with the second motor (3), as well as a connecting link (12), which is rotatably connected in a pivotal point (13) with the first compensating lever (10) and in a second pivotal point (14) with the second compensating lever (11).

2. A drive unit according to Claim 1, **characterized in that** the reaction moment of the motor (2) is transmitted in the opposite direction to the motor (3) and vice versa.

3. A drive unit according to one or more of Claims 1 or 2 **characterized in that** the motors (2, 3) are servomotors.

4. A drive unit according to one or more of Claims 1 to 3, **characterized in that** the motion of the lifting position (10, 11, 12) is limited by stop levers (15, 16), which are firmly connected with gears (4, 5).

5. A drive unit according to one or more of Claims 1 to 4, **characterized in that** buffers (17, 18) are provided on the possible contact surfaces between the compensating levers (10, 11) and the stop levers (15, 16), wherein by means of an adjusting screw (19) the buffers (18), which are connected with the stop levers (15, 16), can be set so that a defined gap arises.

## Revendications

1. Dispositif d'entraînement dans une presse de formage, constitué d'au moins deux moteurs d'entraînement, les moteurs d'entraînement étant reliés de manière fonctionnelle directement ou par l'intermédiaire d'engrenages, avec un moyen de transmission de mouvement, des moteurs (2, 3) étant reliés mécaniquement entre eux par l'intermédiaire d'un ensemble de leviers (10, 11, 12), de façon à ce que les moments de réaction que subissent les moteurs soient compensés mutuellement, **caractérisé en ce que** les moteurs (2, 3) sont utilisés avec une régulation de position et
**en ce que** l'ensemble de leviers pour la compensation des moments de réaction provenant d'un premier levier de compensation (10), qui est relié fermement avec le premier moteur (2), est constitué d'un deuxième levier de compensation (11), qui est relié fermement avec le deuxième moteur (3), ainsi qu'une patte (12), qui est relié de manière rotative au niveau d'un centre de rotation (13), avec le premier levier de compensation (10) et au niveau d'un deuxième centre de rotation (14) avec le deuxième levier de compensation (11).

2. Dispositif d'entraînement selon la revendication 1, **caractérisé en ce que** le moment de réaction du moteur (2) est transmis à contre-sens au moteur (3) et inversement.

3. Dispositif d'entraînement selon l'une ou plusieurs des revendications 1 ou 2, **caractérisé en ce que** les moteurs (2, 3) sont des servomoteurs.

4. Dispositif d'entraînement selon l'une ou plusieurs des revendications 1 à 3, **caractérisé en ce que** le mouvement de l'ensemble de leviers (10, 11, 12) est limité par des leviers de butée (15, 16) qui sont reliés fermement avec des engrenages (4, 5).

5. Dispositif d'entraînement selon l'une ou plusieurs des revendications 1 à 4, **caractérisé en ce que**, au niveau des surfaces de contact possibles entre les leviers de compensation (10, 11) et les leviers de butée (15, 16), sont prévus des tampons (17, 18), les tampons (18), qui sont reliés avec le levier de butée (15, 16) pouvant être réglés au moyen d'une vis de réglage (19), de façon à obtenir un interstice défini.
